(19) Europäisches Patentamt / European Patent Office / Office européen des brevets

(11) **EP 4 101 758 B1**

(12) **EUROPEAN PATENT SPECIFICATION**

(45) Date of publication and mention
of the grant of the patent:
**04.09.2024  Bulletin 2024/36**

(21) Application number: **22177120.7**

(22) Date of filing: **03.06.2022**

(51) International Patent Classification (IPC):
**B64U 30/20** *(2023.01)*

(52) Cooperative Patent Classification (CPC):
**B64U 30/20**

---

(54) **DRONE AND DRONE TORQUE COMPENSATION METHOD**

DROHNE UND VERFAHREN ZUR KOMPENSATION DES DREHMOMENTS EINER DROHNE

DRONE ET PROCÉDÉ DE COMPENSATION ANTICOUPLE POUR DRONE

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.06.2021  KR 20210073396**

(43) Date of publication of application:
**14.12.2022  Bulletin 2022/50**

(73) Proprietor: **Korea Aerospace Research Institute
Daejeon 34133 (KR)**

(72) Inventor: **LEE, Seon Ho
34020 Daejeon (KR)**

(74) Representative: **Loyer & Abello
9, rue Anatole de la Forge
75017 Paris (FR)**

(56) References cited:
WO-A1-2020/191489      WO-A1-2020/204511
KR-A- 20150 138 747      KR-B1- 102 135 837
US-A1- 2016 052 626      US-A1- 2016 122 018
US-A1- 2017 158 342      US-A1- 2018 057 157
US-A1- 2018 229 837      US-A1- 2018 297 695
US-A1- 2018 297 711      US-A1- 2019 176 979
US-A1- 2021 122 466

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

1. Field of the Invention

One or more example embodiments relate to a drone and a drone anti-torque compensation method.

2. Description of the Related Art

A drone, which started in the military industry, refers to an airplane or helicopter-shaped vehicle that flies by induction of radio waves without a person riding the drone, and recently the drone has been widely used in military and commercial applications, and research on the drone is also being actively conducted.

However, due to an increasing demand for drones, a landing device capable of accommodating and transporting a plurality of drones at once is required. In this case, the possibility of collision between drones is increasing due to the lack of space to accommodate a plurality of drones.

Accordingly, when accommodating and transporting a plurality of drones, the need for a system capable of preventing collisions between drones and safely accommodating and transporting the plurality of drones is increasing.

A drone is disclosed in U.S. Patent Application Publication No. 2012/0061508 (Device for Firing Weapons from an Armed Drone, published on March 15, 2012).

US 2019/176979 A1, US 2018/297711 A1, US 2018/297695 A1, US 2016/122018 A1, WO 2020/191489 A1, US 2018/229837 A1, US 2018/057157 A1, WO 2020/204511 A1, KR 102 135 837 B1, US 2016/052626 A1, US 2021/122466 A1 and US 2017/158342 A1 disclose flying devices.

According to its abstract, KR 2015 0138747 A discloses a variable torque compensator and a robot arm using the same.

SUMMARY

The presently claimed invention provides a drone according to appended claim 1 and a drone anti-torque compensation method according to appended claim 3.

Example embodiments provide a drone and a drone anti-torque compensation method capable of stabilizing a posture of the falling drone by preventing tumbling that occurs when the drone falls due to a failure in the drone during flight.

Example embodiments provide a drone and a drone anti-torque compensation method capable of inducing a soft landing of the drone by slowing down fall speed when the drone falls due to a failure in the drone during flight.

Example embodiments provide a drone and a drone anti-torque compensation method capable of securing the time required for expansion of a parachute or airbag by slowing down the fall speed when the drone falls due to a failure in the drone during flight.

Additional aspects of example embodiments will be set forth in part in the description which follows and, in part, will be apparent from the description, or may be learned by practice of the disclosure.

According to example embodiments, a drone and a drone anti-torque compensation method may maintain hovering by executing the rotation stabilization mode of the drone using the anti-torque compensator.

According to example embodiments, a drone and a drone anti-torque compensation method may stabilize the posture of the falling drone by preventing tumbling that occurs when the drone falls due to a failure in the drone during flight.

According to example embodiments, a drone and a drone anti-torque compensation method may secure, when the drone falls due to a failure in the drone during flight, time required for expansion of a parachute or airbag by slowing down the fall speed.

Effects of a drone and a drone anti-torque compensation method according to an example embodiment are not limited to those mentioned above, and other effects not mentioned will be clearly understood by those skilled in the art from the following description.

BRIEF DESCRIPTION OF THE DRAWINGS

These and/or other aspects, features, and advantages of the invention will become apparent and more readily appreciated from the following description of example embodiments, taken in conjunction with the accompanying drawings of which:

FIG. 1 illustrates a front view of a drone according to a first example embodiment;

FIG. 2 is a diagram illustrating an anti-torque compensator of the drone according to the first example embodiment;

FIG. 3 is a diagram illustrating a torsion spring used in the drone according to the first example embodiment;

FIG. 4 is a diagram illustrating a configuration of a propulsor and propeller rotation directions of the drone according to the first example embodiment;

FIG. 5 is a diagram illustrating an operation sequence according to a failure response of the drone according to the first example embodiment;

FIG. 6 is a diagram illustrating the propulsor's response to a failure of the drone according to the first example embodiment;

FIG. 7 is a diagram illustrating anti-torque generation according to a failure of the drone according to the first example embodiment;

FIG. 8 is a diagram illustrating a response of the anti-torque compensator to a failure of the drone according to the first example embodiment;

FIG. 9 is a diagram illustrating a rotation stabilization mode after a failure of the drone occurs according to the first example embodiment;

FIG. 10 illustrates a front view of a drone according to a first example not covered by the presently claimed invention;

FIG. 11 is a front view of a drone according to a second example not covered by the presently claimed invention;

FIG. 12 illustrates a front view of a drone according to a third example not covered by the presently claimed invention;

FIG. 13 is a diagram illustrating an anti-torque generator of a drone according to a fourth example not covered by the presently claimed invention; and

FIG. 14 is a diagram illustrating a response of the anti-torque generator to a failure of the drone according to the fourth example not covered by the presently claimed invention.

## DETAILED DESCRIPTION

Hereinafter, example embodiments will be described in detail with reference to the accompanying drawings. Various modifications may be made to the example embodiments. Here, the example embodiments are not construed as limited to the disclosure and should be understood to include all changes and replacements which fall within the scope of the claims.

The terminology used herein is for the purpose of describing particular example embodiments only and is not to be limiting of the example embodiments. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Hereinafter, example embodiments will be described in detail with reference to the accompanying drawings. When describing the example embodiments with reference to the accompanying drawings, like reference numerals refer to like components and a repeated description related thereto will be omitted. In describing example embodiment, when it is determined that a specific description of a related known technology may unnecessarily obscure the gist of the example embodiments, a detailed description thereof will be omitted.

In addition, although terms of "first," "second," "A," "B," "(a)," "(b)," and the like may be used to explain various components, the components are not limited to such terms. These terms are used only to distinguish one component from another component. When it is mentioned that one component is "connected" or "accessed" to another component, it may be understood that the one component is directly connected or accessed to another component or that still other component is interposed between the two components.

Components included in one example embodiment and components of another example embodiment having a common function will be described using the same name. Unless otherwise stated, descriptions of one example embodiment may be applied to other embodiments as well, and detailed descriptions within the overlapping range will be omitted.

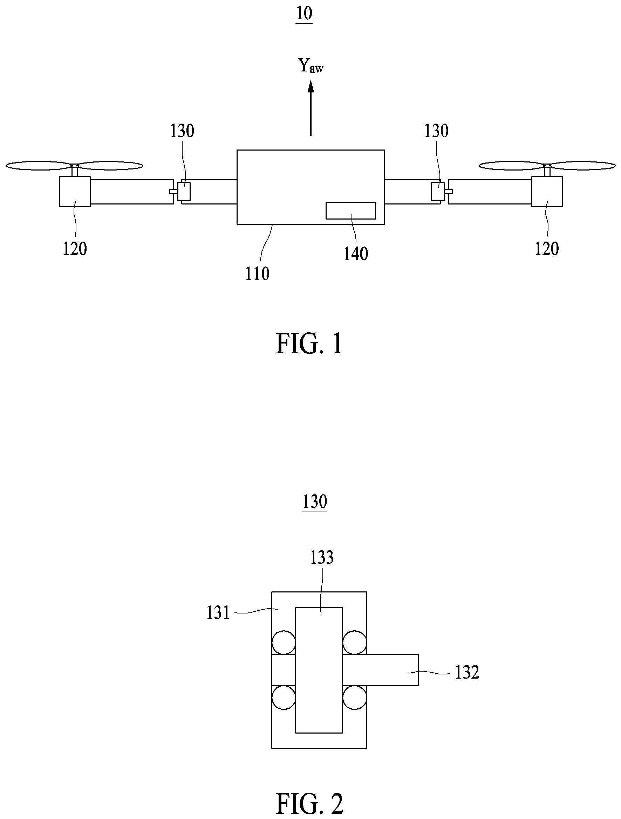

FIG. 1 illustrates a front view of a drone 10 according to a first example embodiment. FIG. 2 shows an anti-torque compensator of the drone according to the first example embodiment.

The drone 10 according to the first example embodiment includes a main body 110, a propulsor 120 provided on an outside of the main body 110 and configured to generate thrust, and an anti-torque compensator 130 configured to compensate for anti-torque of the main body 110 generated by the propulsor 120.

The propulsor 120 includes a propeller and a motor for driving the propeller. The anti-torque compensator 130 maintains constant a yaw-axis angular velocity of the main body 110 within a predetermined target range through tilting of the propulsor 120.

In addition, the drone 10 according to the first example embodiment further includes a controller 140 configured to control driving of the anti-torque compensator 130. When a failure occurs in the propulsor 120, the controller 140 maintains constant the yaw axis angular velocity of the main body 110 by driving the anti-torque compensator 130 to tilt the propulsor 120.

The anti-torque compensator 130 of the drone 10 according to the first example embodiment includes a fixed joint 131 connected to any one of the main body 110 or the propulsor 120, a rotation joint 132 connected to the other one of the main body 110 or the propulsor 120, and a spring 133 connecting the fixed joint 131 and the rotation joint 132. When the yaw axis angular velocity of the main body 110 exceeds a predetermined target value, the controller 140 tilts the propulsor 120 through the rotation joint 132 and the spring 133.

The anti-torque compensator 130 further includes a spring extension switch and a spring extension angle stopper. When the controller 140 transmit an extension command to the spring extension switch, the spring 133 rotates the rotation joint 132 to form a tilt angle between the main body 110 and the propulsor 120, and a tilt angle of the rotation joint 132 is set by the spring extension angle stopper.

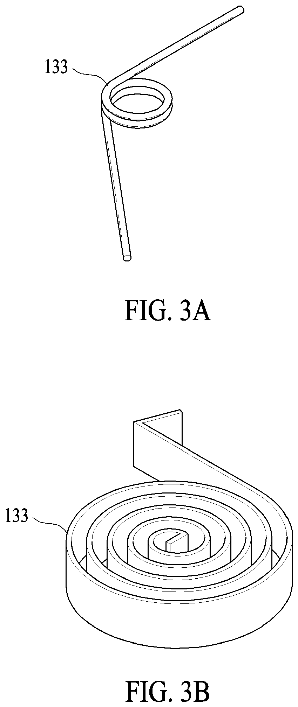

The spring 133 may include a torsion spring as shown in FIG. 3, and tilting of the propulsor may be implemented by the elastic restoring force of the torsion spring according to the extension command of the spring extension switch. For example, the spring 133 may be a wire-shaped torsion spring of FIG. 3(a) or a plate-shaped torsion spring of FIG. 3(b).

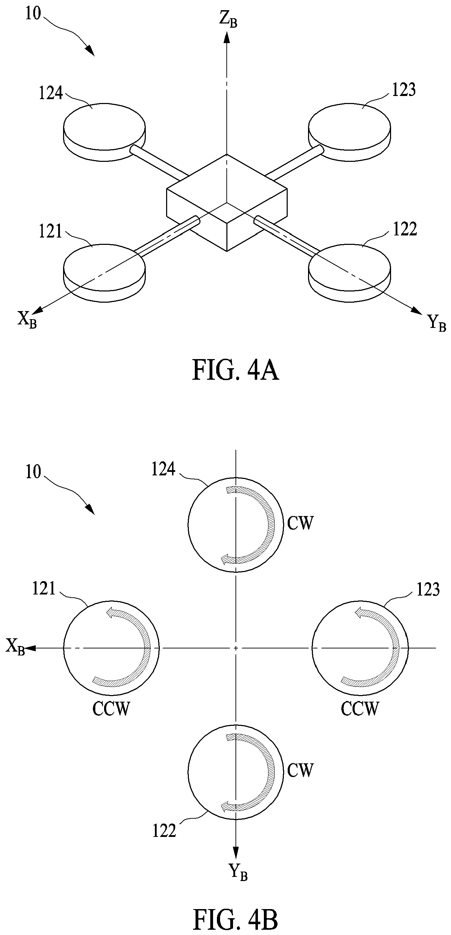

FIG. 4 is a diagram illustrating a configuration of the propulsor 120 and propeller rotation directions of the drone 10 according to the first example embodiment. The propulsor 120 includes a plurality of propellers. Here, as an example, the propulsor 120 may include four propellers 121, 122, 123, and 124.

When a failure occurs in any one of the propellers 121, 122, 123, and 124 of the propulsor 120, the controller 140 may stop driving of another propeller, which is disposed symmetrically with the propeller in which the failure occurs with respect to the main body 110.

Here, as an example, referring to the perspective view of FIG. 4(a), the drone 10 according to the first example embodiment may include four propellers 121, 122, 123, and 124 of the propulsor 120 spaced apart from each other around the main body 110. As shown in Figure 4(b), in the four propellers 121, 122, 123, and 124 of the propulsor 120, each of the propellers 122 and 124 in one line symmetry direction rotates in the clockwise (CW) direction, and each of the propellers 121 and 123 in a different line-symmetric direction may rotate in the counterclockwise (CCW) direction.

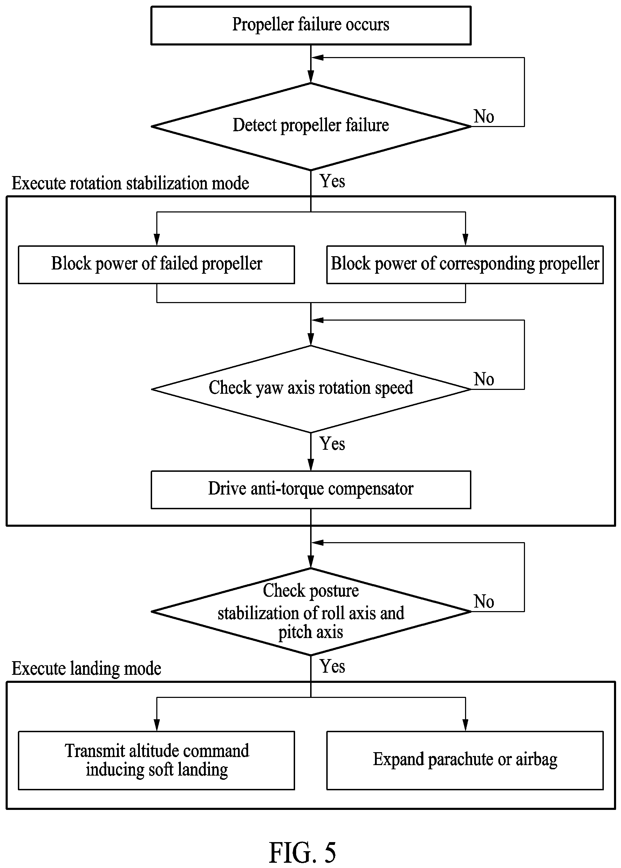

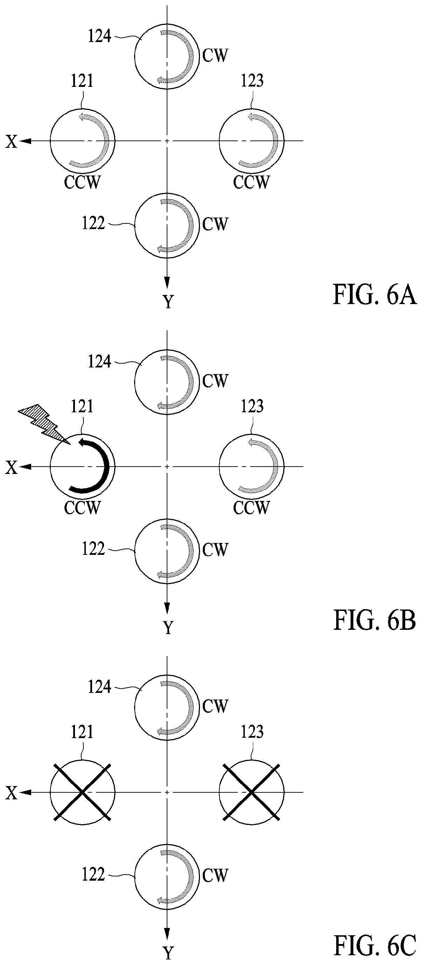

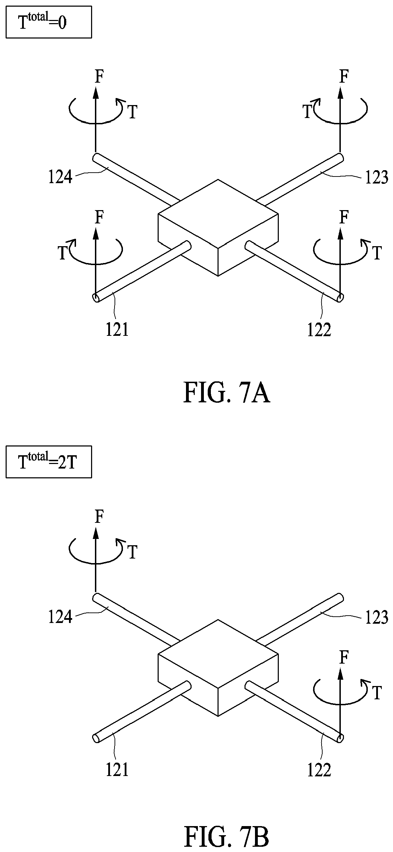

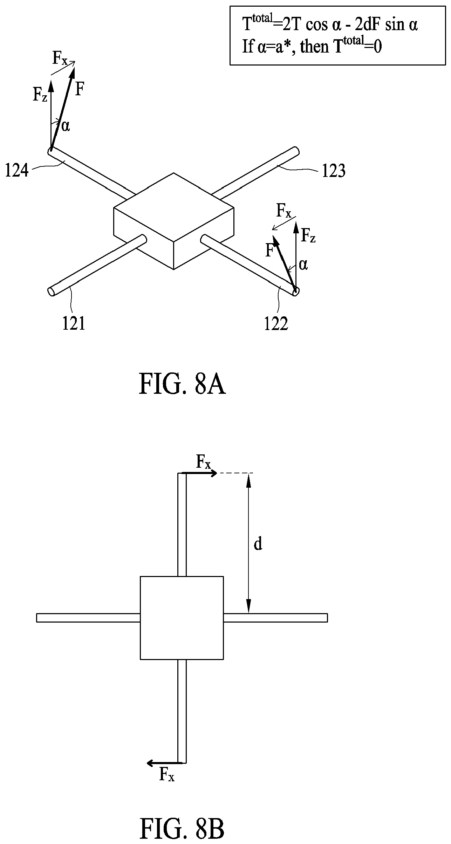

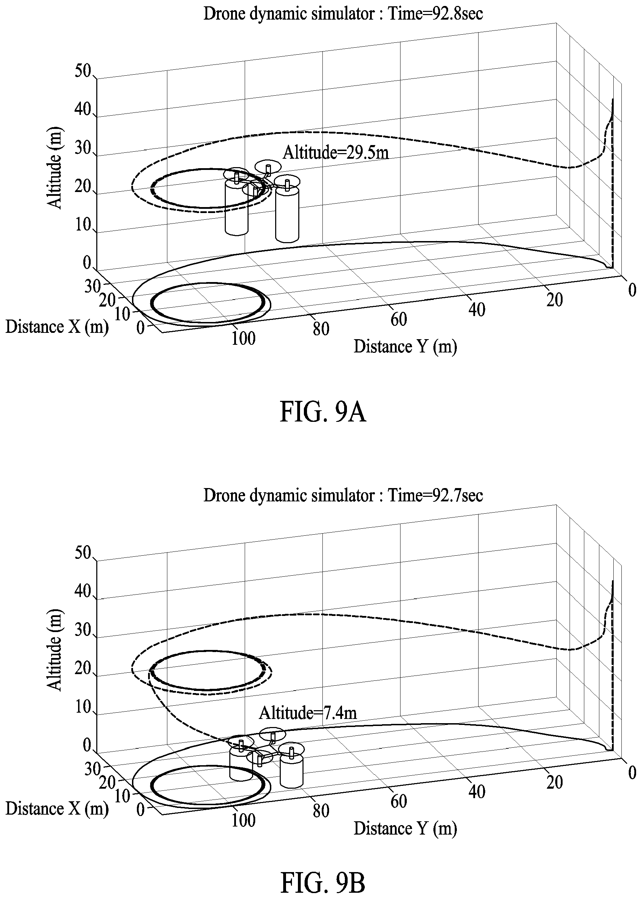

FIG. 5 is a diagram illustrating an operation sequence according to a failure response of the drone 10 according to the first example embodiment. FIG. 6 is a diagram illustrating a response of the propulsor 120 according to a failure of the drone 10 according to the first example embodiment. FIG. 7 is a diagram illustrating anti-torque generation according to a failure of the drone 10 according to the first example embodiment. FIG. 8 is a diagram illustrating a response of the anti-torque compensator 130 according to a failure of the drone 10 according to the first example embodiment. FIG. 9 is a diagram illustrating a rotation stabilization mode after a failure of the drone 10 occurs according to the first example embodiment.

First, the propulsor 120 of the drone 10 according to the first example embodiment may be operating normally as shown in FIG. 6(a). Here, referring to the perspective view of FIG. 7, F is thrust generated by rotation of a single propeller (Force), and T is anti-torque generated by the rotation of the single propeller (Torque). As shown in Figure 7(a), when all four propellers 121, 122, 123, and 124 of the propulsor 120 are in normal operation, the total torque may satisfy zero ($T_{total} = 0$).

At this time, a malfunction of some of the propellers 121, 122, 123, and 124 of the propulsor 120, for example the first propeller 121 of FIG. 6(b), may occur. A propeller failure may be detected by a sensor mounted on the drone 10 detecting a propeller speed, a drone position and posture, and the like.

When a failure of some propellers is detected, the rotation stabilization mode of the drone 10 according to the first example embodiment may be started. Hereinafter, the rotation stabilization mode will be described later.

When a failure occurs in the plurality of propellers 121, 122, 123, and 124 of the propulsor 120, the controller 140 may stop driving of another propeller, which is disposed symmetrically with some propellers having the failure with respect to the main body 110. For example, as shown in FIG. 6(c), the first propeller 121 in which a failure occurs may be powered off, and at the same time, another third propeller 123 disposed symmetrically with the first propeller 121 in which the failure occurs with respect to the main body 110 may be powered off to be stopped to drive.

At this time, referring to FIG. 7(b), only the remaining propellers 122 and 124 other than the third propeller 123 disposed symmetrically with the first propeller 121 in which the failure occurred may be operating. The remaining propellers 122 and 124 may be rotationally driven in the same rotational direction(CW), and at this time, the yaw axis angular velocity may continuously increase in the CCW direction by the anti-torque ($T_{total} = 2T$).

A rotation speed of the yaw axis of the main body 110 may be detected and checked by a sensor or the like. Referring to FIG. 8(a), when the rotation speed of the yaw axis of the main body 110 increases by more than a target spin rate, the controller 140 of the drone 10 according to the first example embodiment may transmit an extension command to the anti-torque compensator 130 to generate a tilt angle $\alpha$ in the remaining propellers 122 and 124 of the propulsor 120.

Referring to FIG. 8(b), the compensation torque (2dFsin$\alpha$) may compensate the anti-torque (2Tcos$\alpha$) generated by the remaining propellers 122 and 124 to maintain constantly the yaw axis angular velocity as the target value. Here, the tilt angle $\alpha$* may be determined by the following equations.

$$T^{total} = 2T\cos(\alpha) - 2dF\sin(\alpha) = 0$$

$$\Rightarrow \tan(\alpha) = \frac{T}{dF}$$

$$\Rightarrow \tan(\alpha) = \frac{C_r}{dC_t} \quad (\text{Using } F = C_t w^2 \text{ and } T = C_r w^2)$$

$$\Rightarrow \alpha^* = atan(\frac{C_r}{dC_t})$$

$C_t$ is the thrust coefficient $\left(\frac{N}{rmp^2}\right)$, $C_r$ is the anti $-$ torque coefficient $\left(\frac{Nm}{rmp^2}\right)$, and $\omega$ is the propeller angular velocity.

Then, the posture stability of the roll axis and the pitch axis of the main body 110 may be checked.

Thereafter, a landing mode of the drone 10 according to the first example embodiment may be started to be executed.

As an example of the landing mode, the drone 10 in which a failure occurred may be induced to land softly. As shown in FIG. 9(a), the drone 10 may maintain a hovering state by maintaining the rotation stabilization mode after a failure occurs. In the simulation for 92.8 sec, the drone 10 was able to maintain the hovering state while maintaining the altitude of 29.5 m. Thereafter, while the drone 10 is switched from the rotation stabilization mode to the landing mode, the controller 140 may transmit an altitude command for inducing a soft landing of the drone 10. As shown in FIG. 9(b), in the simulation for 92.7 sec, the drone 10 was able to land by stably descending to an altitude of 7.4 m. Alternatively, as another example of the landing mode, the drone 10 may land with a parachute or an airbag expanded.

As such, the anti-torque compensation method of the drone 10 according to an example embodiment includes providing a drone according to the presently claimed invention i.e. according to appended claim 1, detecting, by the controller 140, a failure of the propulsor 120, stabilizing, by controller 140, rotation of the main body 110 by blocking power of a part of the propulsor 120, checking, by controller 140, a rotation speed of the yaw axis of the main body 110, and, when the yaw axis angular velocity of the main body 110 reaches a target value, driving, by controller 140, the anti-torque compensator 130 to maintain constantly the yaw axis angular velocity of the main body 110 by tilting the propulsor 120.

The propulsor 120 includes a plurality of propellers 121, 122, 123, and 124, and the stabilizing, by the controller 140, of the rotation of the main body 110 by blocking the power of the part of the propulsor 120 may include, when a failure occurs in any one of the propellers 121, 122, 123, and 124 of the plurality of propellers, stopping, by the controller 140, driving of another propeller 123, which is arranged symmetrically with the propeller 121 in which the failure occurs with respect to the main body 110.

The driving, by controller 140, of the anti-torque compensator 130 when the yaw axis angular velocity of the main body 110 reaches a target value may include transmitting, by the controller 140, an extension command to the anti-torque compensator 130 to generate tilt angles to the remaining propellers 122 and 124, when the yaw axis angular velocity reaches the target value due to the remaining propellers 122 and 124 other than the propeller 121 in which the failure occurs and the other propeller 123 that is symmetrically arranged and stopped.

Example embodiments of the drone and the drone anti-torque compensation method are not limited to the first example embodiment of the drone 10 described above. Hereinafter, other embodiments will be described, and differences from the drone 10 of the first example embodiment will be mainly described.

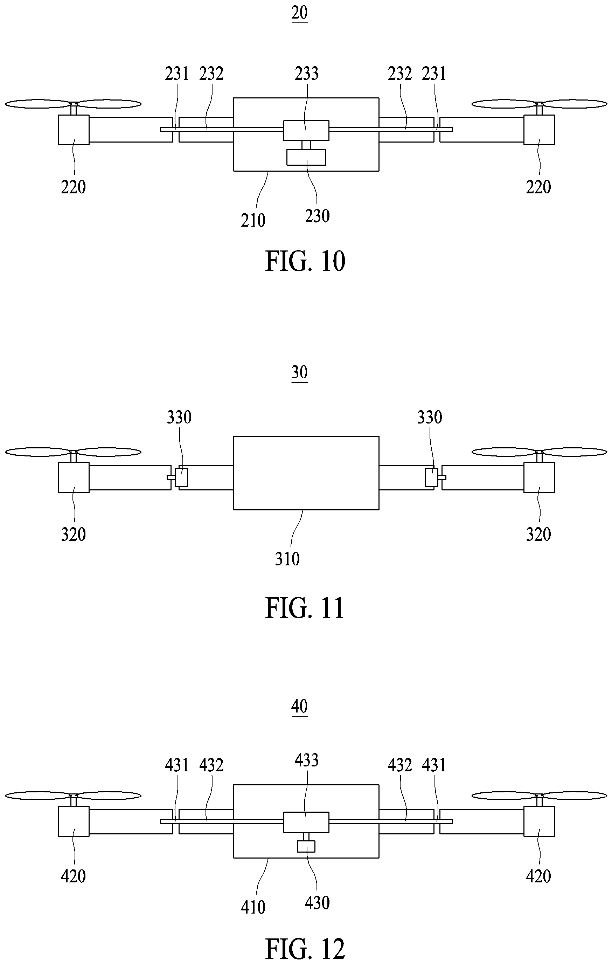

FIG. 10 illustrates a schematic front view of a drone 20 according to a first example not covered by the presently claimed invention.

Referring to FIG. 10, the drone 20 according to the first example may include a main body 210, a propulsor 220, and an anti-torque compensator 230, and the anti-torque compensator 230 may be disposed within the main body 210. The anti-torque compensator 230 may include a rotation joint 231 connected to the propulsor 220, a rotation force transmission member 232 configured to transmit a rotation force to the rotation joint 231, and a gear box 233 connected to the rotation force transmission member 232 and disposed in the main body 210. The rotation force is transmitted from the gear box 233 to the rotation joint 231 through the rotation force transmission member 232, so that the propulsor 220 may be tilted.

The gear box 233 may be connected to the propulsor 220 to tilt the propulsor 220. The gear box 233 is a bevel gear type, and may include a ring gear disposed in the main body 210, and a pinion gear engaging with the ring gear and connected to the rotation force transmission member 232.

FIG. 11 illustrates a schematic front view of a drone 30 according to a second example not covered by the presently claimed invention. FIG. 12 illustrates a schematic front view of a drone 40 according to a third example not covered by the presently claimed invention.

In the drone 30 according to the second example and the drone 40 according to the third example, a motor may be applied instead of a torsion spring.

Referring to FIG. 11, the drone 30 according to the second example may include a main body 310, a propulsor 320, and an anti-torque compensator 330, and the anti-torque compensator 330 may include a fixed joint connected to any one of the main body 310 or the propulsor 320, a rotation joint connected to the other one of the main body 310 or the propulsor 320, and a motor having a housing fixedly disposed on the fixed joint and a motor shaft connected to the rotation joint. When the yaw-axis angular velocity of the main body 310 exceeds a predetermined target value, the controller may tilt the propulsor 320 through the motor.

The drone 30 according to the second example may precisely adjust the tilt angle by feedback control through a motor. However, a controller may be additionally required for the motor, and a gear box 433 may need to be added to implement an example embodiment of the drone 40 according to the fourth example embodiment.

Referring to FIG. 12, the drone 40 according to the third example may include a main body 410, a propulsor 420, and an anti-torque compensator 430, the anti-torque compensator 430 may include a rotation joint 431 connected to the propulsor 420, a rotation force transmission member 432 configured to transmit a rotation force to the rotation joint 431, and a gear box 433 connected to the rotation force transmission member 432, the gear box 433 may be implemented as a bevel gear type, and the anti-torque compensator 430 may include a bevel gear rotation motor in which a rotation shaft is additionally connected to the ring gear.

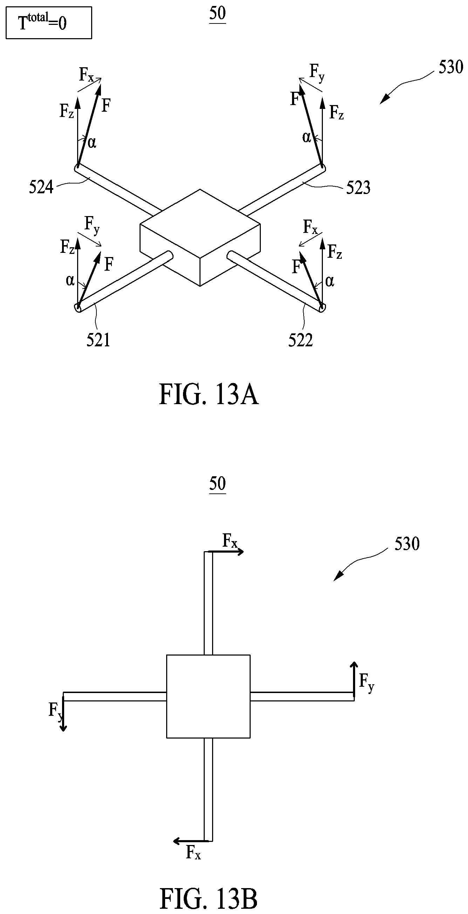

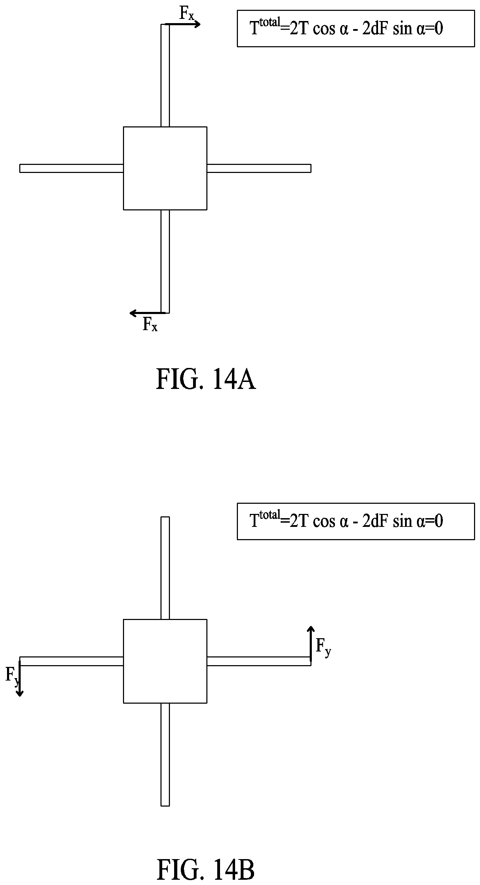

FIG. 13 is a diagram illustrating a anti-torque generator 530 of a drone 50 according to a fourth example. FIG. 14 is a diagram illustrating a response of the anti-torque generator 530 in response to a failure of the drone 50 according to the fourth example.

The anti-torque compensator 530 may be of a fixed type and configured such that a tilting angle is formed between a main body and a propulsor. As shown in FIG. 13, the anti-torque compensator 530 may include a fixed joint connected to any one of the main body or the propulsor, and a rotation joint connected to the other one of the main body or the propulsor, and the fixed joint and the rotation joint may be connected and fixed with a tilting angle formed between the propulsor and the main body.

The drone 50 according to the fifth example embodiment may generate a null space in which $T^{total}=0$ by symmetrically applying a tilt angle before the flight. Referring to FIG. 13(a), when the propulsor is driven, in other words, propellers of the propulsor, for example, when all of four propellers 521, 522, 523, and 524 are driven, a mating force occurs among the propellers 521, 522, 523, and 524 of the propulsor due to the propulsor already forming a tilt angle with respect to the main body. As shown in FIG. 13(b), when the drone 50 is viewed from the front, the $F^x$ mating force between the second propeller 522 and the fourth propeller 524 on the horizontal plane, and a $F^y$ mating force between the first propeller 521 and the third propeller 523 occur, and equilibrium may be achieved.

Due to this fixed anti-torque compensator 530, in the event of a fall accident, referring to FIG. 14, the compensation torque of the remaining propeller may automatically compensate for the anti-torque. In other words, even if the yaw axis is driven by the remaining propeller and rotation of the yaw axis occurs, a compensation torque opposite to the yaw axis rotation direction may be generated. Accordingly, there is no need to additionally provide an extension or driving device. However, it may be necessary to increase the power to generate additional propeller thrust to compensate for loss of the mating force.

As described above, the drone 10 according to the presently claimed invention uses an anti-torque compensator to stabilize the posture of the drone even in a fall accident.

The method according to the above-described example embodiments may be recorded in non-transitory computer-readable media including program instructions to implement various operations which may be performed by a computer. The media may also include, alone or in combination with the program instructions, data files, data structures, and the like. The program instructions recorded on the media may be those specially designed and constructed for the purposes of the example embodiments, or they may be of the well-known kind and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as code produced by a compiler, and files containing higher level code that may be executed by the computer using an interpreter. The described hardware devices may be configured to act as one or more software modules in order to perform the operations of the above-described example embodiments, or vice versa.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

While this disclosure includes example embodiments, it will be apparent to one of ordinary skill in the art that various changes in form and details may be made in these example embodiments without departing from the scope of the claims. For example, suitable results may be achieved if the described techniques are performed in a different order, and/or if components in a described system, architecture, device, or circuit are combined in a different manner and/or replaced or supplemented by other components.

**Claims**

1. A drone comprising:

    a main body (110, 210, 310, 410);
    a propulsor (120, 220, 320, 420) provided on an outside of the main body and configured to generate thrust, wherein the propulsor comprises a plurality of propellers; and
    an anti-torque compensator (130, 230, 330, 430, 530) configured to compensate for anti-torque of the main body generated by the propulsor when a failure occurs in the propulsor,
    wherein the anti-torque compensator is configured to maintain constant a yaw axis angular velocity of the main body within a predetermined target range through tilting of the propulsor, the drone (10, 20, 30, 40, 50) further comprising:

       a controller (140) configured to control driving of the anti-torque compensator,
       wherein, when the failure occurs in the propulsor, the controller is configured to drive the anti-torque compensator to tilt the propulsor to maintain constant the yaw axis angular velocity of the main body,

    wherein the anti-torque compensator comprises:

       a fixed joint (131) connected to any one of the main body or the propulsor;
       a rotation joint (132, 231, 431) connected to the other one of the main body or the propulsor;

    **characterized in that** the anti-torque compensator comprises:

       a spring (133) configured to connect the fixed joint and the rotation joint, **in that**
       the controller is configured to tilt the propulsor through the rotation j oint and the spring when the yaw axis angular velocity of the main body exceeds a predetermined target value, further **characterized in that** the anti-torque compensator further comprises:

          a spring extension switch; and
          a spring extension angle stopper, and **in that**
          when the controller transmits an extension command to the spring extension switch, the spring is configured to rotate the rotation j oint to form a tilt angle between the main body and the propulsor, and the tilt angle of the rotation joint is set by the spring extension angle stopper.

2. The drone of claim 1, wherein the spring comprises a torsion spring, and the tilting of the propulsor is implemented by an elastic restoring force of the torsion spring according to the extension command of the spring extension switch.

3. A drone anti-torque compensation method comprising:

providing a drone as claimed in claim 1 or 2;
detecting, by the controller, a failure of the propulsor;
stabilizing, by the controller, rotation of the main body by blocking power of a part of the propulsor;
checking, by the controller, a rotation speed of a yaw axis of the main body; and
when a yaw axis angular velocity of the main body reaches a target value, driving, by the controller, the anti-torque compensator so that the yaw axis angular velocity of the main body is maintained constant by tilting the propulsor.

4. The drone anti-torque compensation method of claim 3, wherein the stabilizing, by the controller, of the rotation of the main body by blocking the power of the part of the propulsor comprises, when the failure occurs in any one of the plurality of propellers, stopping, by the controller, driving of another propeller arranged symmetrically with the propeller in which the failure occurs with respect to the main body.

5. The drone anti-torque compensation method of claim 4, wherein, when the yaw axis angular velocity of the main body reaches the target value, driving, by the controller, the anti-torque compensator comprises, when a yaw axis angular velocity due to remaining propellers other than the propeller in which the failure occurs and the other propeller that is symmetrically arranged and stopped reaches the target value, transmitting, by the controller, an extension command to the anti-torque compensator to generate a tilt angle to the remaining propellers.

**Patentansprüche**

1. Eine Drohne, die das Folgende aufweist:

- einen Hauptkörper (110, 210, 310, 410);
- einen Propulsor (120, 220, 320, 420), der an einer Außenseite des Hauptkörpers vorgesehen und dafür konfiguriert ist, um einen Schub zu generieren, wobei der Propulsor eine Vielzahl von Propellern aufweist; und
- einen Anti-Drehmoment-Kompensator (130, 230, 330, 430, 530), der dafür konfiguriert ist, um ein Anti-Drehmoment des Hauptkörpers zu kompensieren, das durch den Propulsor dann generiert wird, wenn in dem Propulsor ein Fehler auftritt,
wobei der Anti-Drehmoment-Kompensator dafür konfiguriert ist, um eine Gierachsen-Winkelgeschwindigkeit des Hauptkörpers innerhalb eines vorgegebenen Zielbereichs durch Kippen des Propulsors konstant zu halten,
wobei die Drohne (10, 20, 30, 40, 50) des Weiteren das Folgende aufweist:

- eine Steuerung (140), die dafür konfiguriert ist, um das Antreiben des Anti-Drehmoment-Kompensators zu steuern,

wobei dann, wenn der Fehler in dem Propulsor auftritt, die Steuerung dafür konfiguriert ist, um den Anti-Drehmoment-Kompensator anzutreiben, um den Propulsor zu kippen, um so die Gierachsen-Winkelgeschwindigkeit des Hauptkörpers konstant zu halten,
wobei der Anti-Drehmoment-Kompensator das Folgende aufweist:

- ein Festgelenk (131), das entweder mit dem Hauptkörper oder dem Propulsor verbunden ist;
- ein Drehgelenk (132, 231, 431), das mit dem jeweils anderen Teil, also dem Hauptkörper oder dem Propulsor, verbunden ist;

**dadurch gekennzeichnet,**

- **dass** der Anti-Drehmoment-Kompensator das Folgende aufweist:

- eine Feder (133), die dafür konfiguriert ist, um das Festgelenk und das Drehgelenk miteinander zu verbinden,

- **dass** die Steuerung dafür konfiguriert ist, um den Propulsor durch das Drehgelenk und die Feder zu kippen, wenn die Gierachsen-Winkelgeschwindigkeit des Hauptkörpers einen vorbestimmten Zielwert überschreitet,

des Weiteren **dadurch gekennzeichnet,**

- **dass** der Anti-Drehmoment-Kompensator des Weiteren aufweist:

  - einen Feder-Verlängerungs-Schalter; und
  - einen Feder-Verlängerungs-Winkel-Stopper,

- und **dass** dann, wenn die Steuerung einen Verlängerungs-Befehl an den Feder-Verlängerungs-Schalter überträgt, die Feder dafür konfiguriert ist, um das Drehgelenk zu drehen, um einen Kippwinkel zwischen dem Hauptkörper und dem Propulsor zu bilden, und der Kippwinkel des Drehgelenks durch den Feder-Verlängerungs-Winkel-Stopper eingestellt wird.

2. Die Drohne gemäß dem Anspruch 1, bei der die Feder eine Torsionsfeder aufweist und bei der das Kippen des Propulsors durch eine elastische Rückstellkraft der Torsionsfeder in Übereinstimmung mit dem Verlängerungs-Befehl des Feder-Verlängerungs-Schalters ausgeführt wird.

3. Ein Verfahren zur Kompensation des Anti-Drehmoments einer Drohne, das das Folgende aufweist:

   - Bereitstellen einer Drohne, wie sie in Anspruch 1 oder 2 beansprucht wird;
   - Erkennen eines Fehlers des Propulsors mit Hilfe der Steuerung;
   - Stabilisieren der Drehung des Hauptkörpers mit Hilfe der Steuerung, indem die Leistung eines Teils des Propulsors blockiert wird;
   - Prüfen einer Drehgeschwindigkeit einer Gierachse des Hauptkörpers mit Hilfe der Steuerung; und
   - wenn eine Gierachsen-Winkelgeschwindigkeit des Hauptkörpers einen Zielwert erreicht, Antreiben des Anti-Drehmoment-Kompensators mit Hilfe der Steuerung, so dass die Gierachsen-Winkelgeschwindigkeit des Hauptkörpers durch Kippen des Propulsors konstant gehalten wird.

4. Das Verfahren zur Kompensation des Anti-Drehmoments einer Drohne gemäß dem Anspruch 3, bei dem das Stabilisieren der Drehung des Hauptkörpers mit Hilfe der Steuerung, indem die Leistung des Teils des Propulsors blockiert wird, aufweist, dass dann, wenn der Fehler in irgend einem aus der Vielzahl von Propellern auftritt, der Antrieb eines anderen Propellers, der in Bezug auf den Hauptkörper symmetrisch zu dem Propeller, in dem der Fehler auftritt, angeordnet ist, mit Hilfe der Steuerung gestoppt wird.

5. Das Verfahren zur Kompensation des Anti-Drehmoments einer Drohne gemäß dem Anspruch 4, bei dem das Antreiben des Anti-Drehmoment-Kompensators mit Hilfe der Steuerung, wenn die Gierachsen-Winkelgeschwindigkeit des Hauptkörpers den Zielwert erreicht, aufweist, dass dann, wenn eine Gierachsen-Winkelgeschwindigkeit auf Grund von verbleibenden Propellern, die nicht der Propeller, bei dem der Fehler auftritt, und der andere Propeller, der symmetrisch angeordnet und gestoppt ist, sind, den Zielwert erreicht, ein Verlängerungs-Befehl an den Anti-Drehmoment-Kompensator mit Hilfe der Steuerung übertragen wird, um einen Kippwinkel zu den verbleibenden Propellern zu generieren.

**Revendications**

1. Drone comprenant :

   un corps principal (110, 210, 310, 410) ;
   un propulseur (120, 220, 320, 420) situé sur un extérieur du corps principal et configuré pour générer une poussée, dans lequel le propulseur comprend une pluralité d'hélices ; et
   un compensateur anti-couple (130, 230, 330, 430, 530) configuré pour compenser l'anti-couple du corps principal généré par le propulseur lorsqu'une défaillance survient dans le propulseur,
   dans lequel le compensateur anti-couple est configuré pour maintenir constante une vitesse angulaire d'axe de lacet du corps principal dans une plage cible prédéterminée par une inclinaison du propulseur,
   le drone (10, 20, 30, 40, 50) comprenant en outre :

   un dispositif de commande (140) configuré pour commander l'entraînement du compensateur anti-couple, dans lequel, lorsque la défaillance survient dans le propulseur, le dispositif de commande est configuré pour entraîner le compensateur anti-couple afin d'incliner le propulseur pour maintenir constante la vitesse angulaire d'axe de lacet du corps principal,
   dans lequel le compensateur anti-couple comprend :

un raccord fixe (131) relié à l'un quelconque parmi le corps principal ou le propulseur ;
un raccord de rotation (132, 231, 431) relié à l'autre parmi le corps principal ou le propulseur ;
**caractérisé en ce que** le compensateur anti-couple comprend :

un ressort (133) configuré pour relier le raccord fixe et le raccord de rotation, **en ce que** le dispositif de commande est configuré pour incliner le propulseur par le biais du raccord de rotation et du ressort lorsque la vitesse angulaire d'axe de lacet du corps principal dépasse une valeur cible prédéterminée,
**caractérisé en outre en ce que**
le compensateur anti-couple comprend en outre :

un commutateur d'extension de ressort ; et
une butée d'angle d'extension de ressort, et **en ce que**
lorsque le dispositif de commande transmet une instruction d'extension au commutateur d'extension de ressort, le ressort est configuré pour faire tourner le raccord de rotation pour former un angle d'inclinaison entre le corps principal et le propulseur, et l'angle d'inclinaison du raccord de rotation est réglé par la butée d'angle d'extension de ressort.

2. Drone selon la revendication 1, dans lequel le ressort comprend un ressort de torsion, et l'inclinaison du propulseur est mise en oeuvre par une force de rétablissement élastique du ressort de torsion en fonction de l'instruction d'extension du commutateur d'extension de ressort.

3. Procédé de compensation anti-couple pour drone comprenant :

la fourniture d'un drone selon la revendication 1 ou 2 ;
la détection, par le dispositif de commande, d'une défaillance du propulseur ;
la stabilisation, par le dispositif de commande, de la rotation du corps principal en bloquant l'énergie d'une partie du propulseur ;
la vérification, par le dispositif de commande, d'une vitesse de rotation d'un axe de lacet du corps principal ; et
lorsqu'une vitesse angulaire d'axe de lacet du corps principal atteint une valeur cible, l'entraînement, par le dispositif de commande, du compensateur anti-couple de telle sorte que la vitesse angulaire d'axe de lacet du corps principal est maintenue constante en inclinant le propulseur.

4. Procédé de compensation anti-couple pour drone selon la revendication 3, dans lequel la stabilisation, par le dispositif de commande, de la rotation du corps principal en bloquant l'énergie de la partie du propulseur comprend, lorsque la défaillance survient dans l'une quelconque de la pluralité d'hélices, l'arrêt, par le dispositif de commande, de l'entraînement d'une autre hélice agencée symétriquement à l'hélice dans laquelle la défaillance survient par rapport au corps principal.

5. Procédé de compensation anti-couple pour drone selon la revendication 4, dans lequel, lorsque la vitesse angulaire d'axe de lacet du corps principal atteint la valeur cible, l'entraînement, par le dispositif de commande, du compensateur anti-couple comprend, lorsqu'une vitesse angulaire d'axe de lacet due aux hélices restantes autres que l'hélice dans laquelle la défaillance survient et l'autre hélice qui est agencée symétriquement et arrêtée atteint la valeur cible, la transmission, par le dispositif de commande, d'une instruction d'extension au compensateur anti-couple pour générer un angle d'inclinaison aux hélices restantes.

10

$Y_{aw}$

130                    130

120        110        140        120

FIG. 1

130

133

131        132

FIG. 2

FIG. 3A

FIG. 3B

**FIG. 4A**

**FIG. 4B**

```
┌─────────────────────────────────┐
│      Propeller failure occurs    │
└─────────────────────────────────┘
                 │
                 ▼
          ◇ Detect propeller failure ◇ ──── No
                 │ Yes
```

Execute rotation stabilization mode

```
┌──────────────────────────────┐  ┌─────────────────────────────────────┐
│ Block power of failed propeller│  │ Block power of corresponding propeller│
└──────────────────────────────┘  └─────────────────────────────────────┘
                 │
                 ▼
        ◇ Check yaw axis rotation speed ◇ ──── No
                 │ Yes
                 ▼
┌─────────────────────────────┐
│   Drive anti-torque compensator │
└─────────────────────────────┘
```

```
        ◇ Check posture
        stabilization of roll axis and ◇ ──── No
              pitch axis
                 │ Yes
```

Execute landing mode

```
┌──────────────────────────────┐  ┌─────────────────────────────────┐
│  Transmit altitude command    │  │    Expand parachute or airbag   │
│  inducing soft landing         │  │                                 │
└──────────────────────────────┘  └─────────────────────────────────┘
```

FIG. 5

FIG. 6A

FIG. 6B

FIG. 6C

$T^{total}=0$

FIG. 7A

$T^{total}=2T$

FIG. 7B

$$T^{total} = 2T \cos \alpha - 2dF \sin \alpha$$
$$\text{If } \alpha = a^*, \text{ then } T^{total} = 0$$

FIG. 8A

FIG. 8B

Drone dynamic simulator : Time=92.8sec

Altitude=29.5m

FIG. 9A

Drone dynamic simulator : Time=92.7sec

Altitude=7.4m

FIG. 9B

<u>20</u>

FIG. 10

<u>30</u>

FIG. 11

<u>40</u>

FIG. 12

FIG. 13A

FIG. 13B

$$T^{total} = 2T \cos \alpha - 2dF \sin \alpha = 0$$

$F_x$

$F_x$

FIG. 14A

$$T^{total} = 2T \cos \alpha - 2dF \sin \alpha = 0$$

$F_y$

$F_y$

FIG. 14B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120061508
- US 2019176979 A1
- US 2018297711 A1
- US 2018297695 A1
- US 2016122018 A1
- WO 2020191489 A1
- US 2018229837 A1
- US 2018057157 A1
- WO 2020204511 A1
- KR 102135837 B1
- US 2016052626 A1
- US 2021122466 A1
- US 2017158342 A1
- KR 20150138747 A